# FASCICULE DE BREVET EUROPEEN

(11) **EP 2 795 575 B1**
(45) Date de publication et mention de la délivrance du brevet: **22.06.2016**
(21) Numéro de dépôt: 12799227.9
(22) Date de dépôt: 13.12.2012
(51) Int. Cl.: H04N 5/225, G06T 1/20, H04N 5/345, H04N 13/02

(54) **CAPTEUR DE VISION TRIDIMENSIONNELLE INTEGRE**
INTEGRIERTER DREIDIMENSIONALER VISION SENSOR
INTEGRATED THREE-DIMENSIONAL VISION SENSOR

(30) Priorité: 22.12.2011 FR 1162308
(43) Date de publication de la demande: 29.10.2014
(73) Titulaire: Commissariat à l'Énergie Atomique et aux Énergies Alternatives, 75015 Paris (FR)
(72) Inventeur: KOLAR, Anthony, F-75013 Paris (FR); DURANTON, Marc, F-91400 Orsay (FR)
(74) Mandataire: Joubert, Cécile
(86) Numéro de dépôt international: PCT/EP2012/075446
(87) Numéro de publication internationale: WO 2013/092396

(56) Documents cités:
- WO-A1-2010/035173
- US-A1- 2009 167 923
- AMIR FIJANY ET AL: "Image processing applications on a low power highly parallel SIMD architecture", AEROSPACE CONFERENCE, 2011 IEEE, IEEE, 5 mars 2011 (2011-03-05), pages 1-12, XP031938041, DOI: 10.1109/AERO.2011.5747456 ISBN: 978-1-4244-7350-2
- AKOS KUSNYERIK ET AL: "Vision Restoration and Vision Chip Technologies", PROCEDIA COMPUTER SCIENCE, vol. 7, 6 mai 2011 (2011-05-06), - 6 mai 2011 (2011-05-06), pages 121-124, XP028348720, ISSN: 1877-0509, DOI: 10.1016/J.PROCS.2011.12.036 [extrait le 2011-12-22]
- OHBA K ET AL: "Real-time micro environmental observation with virtual reality", PATTERN RECOGNITION, 2000. PROCEEDINGS. 15TH INTERNATIONAL CONFERENCE ON SEPTEMBER 3-7, 2000; [PROCEEDINGS OF THE INTERNATIONAL CONFERENCE ON PATTERN RECOGNITION. (ICPR)], LOS ALAMITOS, CA, USA,IEEE COMPUT. SOC, US, vol. 4, 3 septembre 2000 (2000-09-03), pages 487-490, XP010533124, DOI: 10.1109/ICPR.2000.902963 ISBN: 978-0-7695-0750-7

## Description

### DOMAINE DE L'INVENTION

L'invention concerne les capteurs de scène tridimensionnelle (dit capteur de vision en relief ou 3D) et en particulier les capteurs de vision en relief destinés à être embarqués.

### ETAT DE LA TECHNIQUE

Des systèmes de vision en relief sont développés pour fournir une représentation spatiale de scènes à des systèmes embarqués dans de nombreuses applications. On citera à titre d'exemples :
La robotique autonome nécessite une vision 3D pour la reconnaissance des formes et l'analyse topographique. Par exemple la robotique domestique est en pleine expansion afin d'apporter différents services à l'utilisateur tels que la surveillance de lieu ou de personnes, la reconnaissance faciale en vue d'effectuer une certaine action en fonction de la personne...

La microrobotique concerne les micro-robots utilisés pour des missions de reconnaissance dans des milieux confinés tels que locaux industriels, grottes, maisons.

Une représentation 3D peut apporter une information pertinente utilisable dans le domaine biomédical, et plus particulièrement l'endoscopie, afin d'aider le praticien à reconnaître des zones d'intérêt tels que des polypes, voir lui permettre d'en estimer la taille.

L'assistance à la conduite, avec comme priorité l'amélioration de la sécurité, présente de nombreuses applications nécessitant des capteurs 3D : détection d'objets (piétons ou véhicules) en vue de la prévision des collisions ; régulation de vitesse par rapport au véhicule précédent ; détermination du gabarit des passagers pour l'adaptation des airbags ; détection et tenue de cap, aide au changement de voie (surveillance de l'angle mort).

L'émergence de ces nouveaux domaines d'applications fait apparaître de nombreuses contraintes qui constituent autant de verrous à la réalisation de systèmes de vision en relief. Ces systèmes ou capteurs doivent être hautement intégré (taille, poids) afin de pouvoir être embarqué, communicants, avoir une faible consommation énergétique et une capacité de vision en temps réel tout en assurant un degré de précision élevé.

Il existe un certain nombre de dispositifs qui visent à répondre aux besoins précités.

L'une des solutions existante est le capteur Swiss Ranger 3000 et 4000 issu de la société *MESA Imaging.* Il s'agit d'une application de reconstruction 3D par temps de vol utilisant une source modulée nécessitant une miniaturisation des systèmes. Ce capteur permet la reconstruction d'une scène avec une précision centimétrique jusqu'à dix mètres à une cadence de cinquante images par seconde. Ce système comporte néanmoins les limitations suivantes :
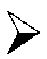 La distance de reconstruction, limitée à une dizaine de mètres ;
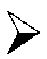 La consommation électrique avoisinant la dizaine de watts, ce qui est incompatible avec la l'intégration haut niveau souhaitée ;
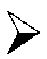 La taille globale du système, 65*65*68 mm, rendant l'utilisation de ce capteur impossible dans les cas fortement contraints en taille tels que les micros drones ;
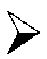 L'utilisation d'une méthode active (émission énergétique) rend l'utilisation de ce produit impossible lorsque plusieurs capteurs identiques ciblent une même scène : impossibilité de définir avec certitude la source de l'onde. Ce point peut être critique dans le cas, par exemple, de l'automobile en particulier si le système est un maillon de la chaine de traitement visant la prédiction de collision.

Une autre solution existante est celle développée par la société *Videre Design,* basée sur les systèmes stéréoscopique sur puce. La méthode repose sur la création d'une carte de disparité en plusieurs niveaux (plus la disparité est grande plus l'objet est proche), mais la précision dépend directement de la taille de la base stéréoscopique (distance séparant les deux objectifs) qui dans ce cas varie de neuf à trente centimètre, une forte intégration est alors impossible. De plus, cette méthode ne peut fonctionner qu'en supposant que la scène soit suffisant texturée pour déterminer une disparité, ce qui n'est pas le cas dans certains cadres applicatifs tels que l'endoscopie.

Le Kinect de Microsoft développé par PrimeSense repose sur une solution de stéréoscopie active, c'est à dire utilisant une caméra et un projecteur de motif dans le spectre du proche infrarouge, et génère une carte de profondeur pour permettre une interaction humaine avec la machine. De cette manière, cette interaction se fait dans toutes les directions de l'espace, amenant ainsi un pilotage intuitif des applications. Les principaux inconvénients de ce dispositif sont son manque de précision et surtout la latence globale du système pouvant pénaliser dans certain cas une bonne utilisation.

Les solutions phénoptiques telles que décrites par exemple dans le document *"*Synthetic Aperture Tracking: Trackingthrough Occlusions" de Joshi, N. ; Avidan, S. ; Matusik, W. ; Kriegman, D.J. ; Adobe Syst. Inc, San Diego, Computer Vision, 2007 permettent à la fois la reconstruction du relief avec ou sans occultation et la mise au point en tous points de l'image, pendant ou après l'acquisition de l'image. Le principe repose sur la dépose d'un jeu de micro-lentilles au dessus du capteur d'images. Chacune de ces lentilles est caractérisée par une longueur focale différente, ainsi chaque groupe de pixels associé à ces lentilles focalisera à une distance donnée. Cette méthode présente alors la possibilité de reconstruire une image nette en tout point d'une part, et de reconstruire la profondeur de la scène en réduisant le système à une solution de vision passive multi-capteurs d'autre part. Cette technologie est utilisée par la société Pélican Imaging (Californie), et est actuellement au stade du prototypage. Les premiers démonstrateurs ne sont pas intégrables de par leurs tailles, plus d'un mètre de largueur, et leur consommation. De plus, dans le cadre d'une reconstruction 3D, le problème de l'espacement entre les lentilles dans une version intégrée pour téléphone portable par exemple, limiterait la distance de reconstruction à seulement quelques dizaines de centimètres.

L'Université des Sciences de Tokyo décrit dans le document *"*High-speed Sensing System for Depth Estimation Based on Depth-from-Focus by Using Smart Imager",ISCAS 2005, Juillet 2005, de Arimitsu Yokota, Takashi Yoshida, Hideki Kashiyama, et Takayuki Hamamoto, un système de vision utilisant un capteur d'image couplé à une optique à focale variable et basé sur un procédé de calcul permettant d'obtenir une carte de profondeur. Cependant, les calculs et traitements nécessaires à l'obtention de la carte de profondeur sont faits de manière déportée, ce qui ne permet aucune flexibilité du système et aboutit à une cadence de génération de carte de profondeur faible, de l'ordre de 30 cartes de profondeur par seconde, avec un capteur d'image comprenant un faible nombre de pixels (64x64).

Fijany, A.; Hosseini, F., "Image processing applications on a low power highly parallel SIMD architecture," in Aerospace Conférence, 2011 IEEE , vol., no., pp.1-12, 5-12 March 2011 divulgue le couplage d'un moyen de traitement de type SIMD (de l'anglais single input multiple data) à un capteur d'image pour implémenter des applications de traitement d'image. L'un des ces traitements est la détermination de profondeur.

### BUT DE L'INVENTION

L'invention a pour but de pallier les inconvénients précités en permettant de réaliser un capteur de vision tridimensionnelle à la fois très compact en volume et en poids, ayant une faible consommation, ne nécessitant pas de mémoire d'image externe et permettant d'obtenir une information de profondeur en temps réel et à une cadence élevée.

### DESCRIPTION DE L'INVENTION

A cet effet l'invention a pour objet un capteur d'une scène tridimensionnelle comprenant :
- une optique déformable permettant une modification de la distance focale en fonction d'un signal de commande, ladite optique imageant ladite scène sur un capteur d'image analogique pour une pluralité de profondeurs correspondant à une pluralité de valeurs de distance focale,
- le capteur d'image analogique réalisant une acquisition d'image pour chaque valeur de distance focale,
- les images étant analysées afin de déterminer une information de profondeur,
- le capteur d'image analogique comprenant une matrice de pixels, les pixels étant regroupés en sous-matrices dénommées macropixels constitués d'un sous-ensemble de pixels, chaque macropixel fonctionnant de manière indépendante de ses voisins pour l'acquisition et la lecture des données des pixels pour chaque portion d'image, une portion d'image étant respectivement associée à un macropixel,
- une matrice de processeurs élémentaires, chaque macro-pixel étant connecté directement par une interface à un processeur élémentaire dédié de sorte que les données pixels relatives auxdits pixels appartenant audit macropixel soient transmises et traitées par ledit processeur, chacun des processeurs comprenant une mémoire locale, un gestionnaire de voisinage et une pluralité d'unités de traitements locales de manière à effectuer, pour chacun des pixels du macropixel auquel le processeur est connecté et pour chaque portion d'image, des traitements locaux prenant en compte les pixels voisins, les traitements locaux permettant de calculer une information de profondeur dudit macropixel, les processeurs fonctionnant en parallèle et indépendamment les uns des autres de sorte que pour chaque portion image l'information de profondeur est traitée et calculée en parallèle sur l'ensemble des macropixels dudit capteur d'image,
- chaque processeur élémentaire étant apte à modifier certains paramètres du capteur d'image correspondant au macropixel associé,
- les processeurs étant aptes à être reliés à au moins une unité de traitement permettant d'effectuer des calculs à partir de données d'entrée évoluées, obtenues à partir des informations de profondeur calculées par les processeurs élémentaires.

### DESCRIPTION DETAILLEE DE L'INVENTION

D'autres caractéristiques, but et avantages de la présente invention apparaîtront à la lecture de la description détaillée qui va suivre et en regard des dessins annexés donnés à titre d'exemples non limitatifs et sur lesquels :
- La figure 1 décrit le principe du capteur selon l'invention ;
- La figure 2 décrit un mode de représentation plus détaillé de l'invention ;
- La figure 3 décrit un exemple d'architecture du capteur selon l'invention ;
- La figure 4 décrit un exemple de réalisation du capteur selon l'invention ;
- La figure 5 décrit le procédé de calcul de l'information de profondeur selon l'invention.

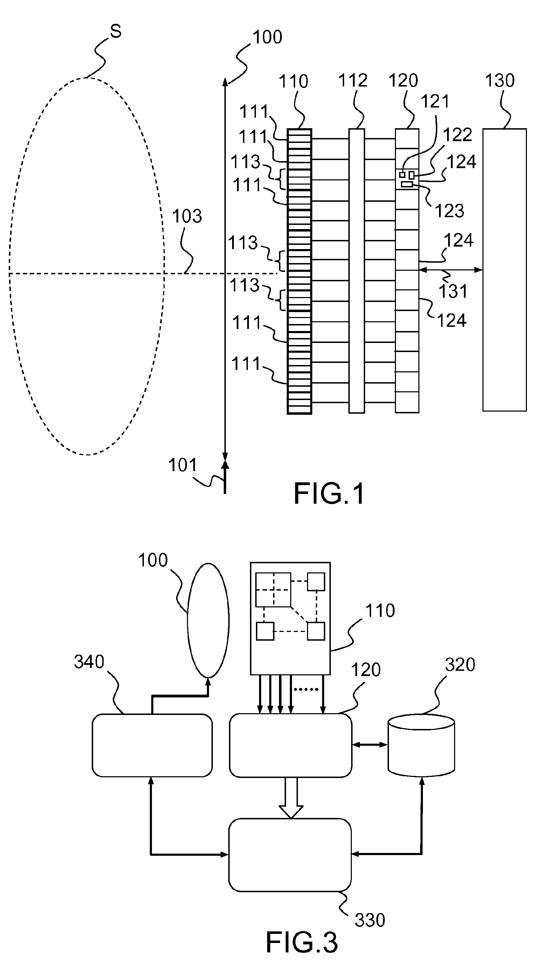

La figure 1 représente le principe du capteur selon l'invention.
Une optique déformable 100, apte à se déformer selon les trois axes spatiaux, image une scène tridimensionnelle S sur un capteur d'image analogique 110. La distance focale de l'optique déformable est variable à haute cadence, sa valeur étant commandée à l'aide d'un signal de commande 101. Une pluralité de plans ou profondeurs de la scène tridimensionnelle, correspondant à une pluralité de distances focales fn, n indice variant de 1 à n0, sont ainsi imagés successivement selon un pluralités d'images In sur le capteur en fonction du signal de commande 101. Le capteur analogique d'images réalise une acquisition d'images In pour chaque valeur de distance focale Fn.
Les images successives In sont analysées afin de déterminer une information de profondeur.

Avantageusement, l'axe optique 103 de l'optique 100 est également modifiable à haute cadence en fonction du signal de commande.

Le capteur d'image analogique 110 est constitué d'éléments d'images élémentaires ou pixels 111. Chaque pixel ou élément d'acquisition d'image capte l'information optique (fonction d'acquisition des données) et la transforme en un signal électrique apte à être lu à l'aide de circuits (fonction de lecture des données). Les pixels 111 du capteur sont agencés de manière matricielle, selon des lignes et des colonnes.
Les pixels 111 du capteur sont regroupés en sous-matrices 113 dénommées macropixels. Chaque macropixel 113 est constitué d'un sous-ensemble de pixels et fonctionne de manière indépendante de ses voisins pour l'acquisition et la lecture des données des pixels qu'il regroupe, et ce pour chaque image traitée. Chaque macropixel possède sa propre logique d'adressage. A chaque macropixel est associé une portion d'image correspondant à la portion de l'image imagée sur le macropixel.

Les macropixels 113 sont reliés à une matrice 120 de processeurs élémentaires 124 par une interface 112. Chaque macro-pixel est connecté directement par l'interface 112 à un processeur élémentaire dédié de sorte que les données relatives aux pixels appartenant au macropixel soient transmises et traitées par le processeur auquel le macropixel est connecté.

Chaque processeur élémentaire comprend une mémoire locale 123 , un gestionnaire de voisinage 121 et une pluralité d'unités de traitements locales 122, de manière à effectuer, pour chacun des pixels du macropixel auquel le processeur est connecté et pour chaque portion d'image, des traitements locaux dits de bas niveau, prenant en compte les pixels voisins. Appliqués à une succession d'images In ces traitements locaux permettent de calculer l'information de profondeur de la portion d'image associée au macropixel. Ces traitements sont accélérés en parallélisant le calcul du fait de la pluralité de processeurs élémentaires par macropixels. L'information de profondeur est ainsi obtenue par macro-pixel, et non pas par pixel, ce qui correspond à un sous échantillonnage spatial du capteur d'image. A titre d'exemple un macropixel peut regrouper 16x16 pixels.
L'information de profondeur comprend une valeur de meilleure netteté pour le macropixel correspondant et une valeur de l'indice n de la focale fn pour laquelle la meilleure valeur de netteté du macropixel correspondant est obtenue
La carte de netteté correspond à un tableau de données, chaque élément du tableau correspondant à un macropixel, la donnée du tableau étant égale à l'indice n de la focale fn pour laquelle la meilleure valeur de netteté du macropixel correspondant est obtenue.
L'information de profondeur peut comprendre une valeur de profondeur. La profondeur est égale à la distance métrique pour laquelle le macropixel correspondant est le plus net (meilleure netteté).
La carte de profondeur correspond à un tableau de données, chaque élément du tableau correspondant à un macropixel, la donnée étant égale à la valeur de profondeur (distance métrique) pour laquelle le macropixel correspondant est le plus net (meilleure netteté).

Les processeurs élémentaires fonctionnent en parallèle et indépendamment les uns des autres de sorte que pour chaque portion d'image l'information de profondeur est traitée et calculée en parallèle et indépendamment sur l'ensemble des macropixels du capteur d'image.

De plus, chaque processeur élémentaire est apte à modifier certains paramètres du capteur d'image correspondant au macropixel associé.
Les processeurs sont aptes à être reliés à au moins une unité de traitement 130. Cette unité effectue les traitements dits de haut niveau, correspondant à des traitements qui utilisent comme données d'entrée des données évoluées obtenues à partir des informations de profondeur calculées par les processeurs élémentaires 124.

L'invention permet ainsi un calcul de l'information de profondeur massivement parallélisé, permettant par exemple l'obtention de la carte de profondeur en temps réel à haute cadence.
La large bande passante entre les éléments d'acquisition d'image (pixels) d'un macropixel et les processeurs élémentaires correspondants (bande passante croissant linéairement avec le nombre de pixels ajoutés à l'ensemble d'acquisition) permet de faire une acquisition et un traitement à grande vitesse, par exemple de l'ordre de 1000 acquisitions par macropixel et par seconde ou plus. Cette rapidité de traitement associée à une lentille modifiant sa focale rapidement, permet d'effectuer les divers échantillonnages d'image (par macropixel) rapidement, et donc d'obtenir une carte de profondeur à la même vitesse qu'une capture video standard (30 ou 60 fois par seconde) tout en ayant un grand nombre de portions d'image ou d'imagettes (images par macropixel) nécessaires pour l'algorithme de calcul de profondeur par netteté.

Grâce à une réalisation des communications directement entre les éléments d'acquisition d'image et les processeurs élémentaires, la bande passante de communication est indépendante du nombre de pixels et ce contrairement à une réalisation classique où la communication entre les capteurs d'image et les unités de traitement passe par un balayage séquentiel. La réalisation classique implique une limitation du nombre de pixels pouvant être reliés aux unités de traitement du fait de la fréquence limite de communication.
D'autre part, il n'est pas nécessaire d'avoir une mémoire d'image externe (« frame buffer ») comme dans les dispositifs classiques ou le capteur écrit séquentiellement les valeurs de pixels en mémoire afin qu'ils soient aussi relus séquentiellement par le dispositif de traitement.

Le capteur selon l'invention supporte par exemple des résolutions d'image de plusieurs millions de pixels (par exemple 8182 x 4096 dans le format "super High Vision" de la NHK au Japon).

L'indépendance des processeurs élémentaire permet de rendre chaque processeur élémentaire apte à modifier certains paramètres du capteur d'image correspondant au macropixel associé.
Les instructions de modifications des paramètres sont envoyées par le processeur élémentaire aux pixels du capteur d'image appartenant au macropixel correspondant par l'interface 112, qui est bidirectionnelle.
En effet l'interface 112 établit une connexion bidirectionnelle entre le macropixel et le microprocesseur correspondant. Les données pixels sont envoyées par le capteur d'image au microprocesseur et les instructions de modification des paramètres sont envoyées par le microprocesseur élémentaire au capteur d'image.
On peut ainsi réaliser des pré-traitements d'image par modification des paramètres du capteur d'image localement par macropixel. On optimise le pré-traitement d'image avant le calcul de l'information de profondeur. Par exemple par macropixel on cherche à obtenir une valeur maximale du contraste pour obtenir une meilleure précision sur le calcul de profondeur. Par exemple, le temps d'acquisition peut être réglé indépendamment par macropixel, et ainsi on le règle de façon optimale en fonction de la luminosité moyenne du macro-pixel : un macropixel faiblement illuminé aura un temps d'acquisition plus grand afin de capter plus de photons qu'un macropixel fortement illuminé.
Selon un autre exemple on peut régler le gain de la chaine d'acquisition de chaque macropixel en fonction de la luminosité. : une image comportant des zones sombres et d'autres fortement illuminée aura ainsi un réglage optimal par zone macropixel, et non un réglage moyen sur toute l'image comme avec un système classique.
D'autres traitements d'amélioration d'image peuvent être effectués en fonction des caractéristiques des pixels constituant le macro-pixel et ainsi réaliser des prétraitements indépendants par macropixel qui permettent d'améliorer les conditions dans lesquels l'algorithme de détection de profondeur s'effectue.
L'indépendance des macropixels permet également de varier la fréquence de traitement, définie comme la fréquence de mise à jour des résultats de profondeur, en fonction du macropixel. Cette variation permet de réduire la consommation électrique du dispositif à l'aide de différents mécanismes comme :
- de couper l'alimentation (ou l'horloge) des macropixels ayant terminé leurs calculs en attendant que tous les macropixels aient fini leurs opérations,
- de faire varier la tension d'alimentation des macropixels en fonction de leur fréquence de fonctionnement (une fréquence plus faible induit une tension d'alimentation possible plus faible, ce qui implique une consommation plus faible car la consommation est proportionnelle à la fréquence et au carré de la tension d'alimentation).

La fréquence de traitement peut varier en fonction de la luminosité et/ou en fonction des mouvements et variations de la scène observée. Par exemple, un macropixel détectant une distance d'objet éloignée peut réduire sa fréquence de traitement car un objet éloigné à peu de chances de venir très près rapidement (le taux minimum de rafraichissement des calculs de profondeur est déterminé de façon que ce ne soit pas le cas).

Préférentiellement, l'optique déformable 100 a un faible encombrement, une faible consommation et est apte à répondre à grande vitesse au signal de commande de manière à obtenir un capteur possédant les mêmes avantages.

Avantageusement, pour obtenir un capteur compact, l'optique déformable 100, le capteur d'image analogique 110 et la matrice de processeurs 120 forment un empilement.

Avantageusement les processeurs élémentaires sont aptes à communiquer avec leurs proches voisins (4 proches voisins ou 8 proches voisins) de manière à échanger des informations de profondeur, par exemple en échangeant de façon asynchrone leur valeur de profondeur calculée. En variante d'autres caractéristiques telles le gradient de luminosité sont également échangées.
Ces informations permettent à chaque macropixel de générer non seulement une valeur de profondeur moyenne, mais aussi des valeurs supplémentaires aux interfaces avec les autres macro-pixels afin d'avoir une carte globale plus résolue (avec plus de valeurs de profondeurs) et d'éliminer les erreurs dues aux transitions entre macropixels. Par exemple, un macropixel peut fournir 5 ou 9 valeurs différentes, une valeur centrale, correspondant à la distance détectée par l'algorithme, mais aussi les valeurs d'interfaces permettent une transition avec les 4 ou 8 valeurs de profondeur des macropixels voisins.
Une autre exemple de réalisation, demandant plus de calculs et de complexité, utilise les valeurs fournies par les macropixels voisins pour déterminer si le macropixel "est" sur une zone homogène en profondeur, ou sur une zone de transition, et ainsi donner des résultats reflétant cette situation.

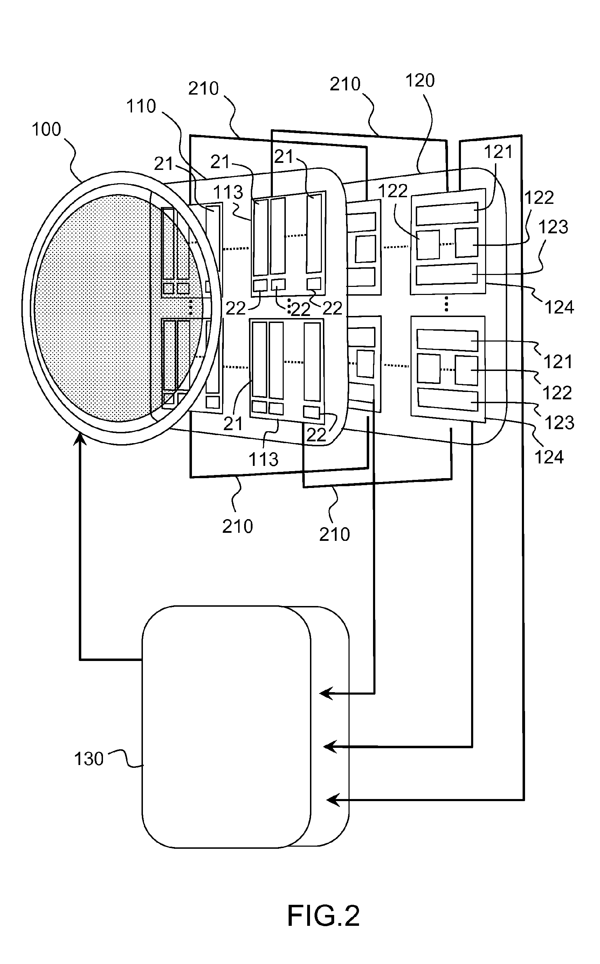

La figure 2 décrit un mode de représentation plus détaillé du capteur selon l'invention et un exemple de fonctionnement qui avantageusement optimise le parallélisme au niveau de la lecture du macropixel. Dans un macropixels, chaque colonne de pixel 21 est reliée à un circuit du type convertisseur analogique/digital 22 bien connu de l'homme du métier, pour la lecture des données pixels. Ainsi, toutes les colonnes du macropixel sont lues en parallèle, et le mode d'acquisition est par exemple du type « rolling shutter ». La présence d'un convertisseur 22 à l'extrémité de chaque colonne du macropixel permet de lire une ligne complète en un temps de cycle. Avec l'exemple d'un macropixel de 16x16 pixels, il faut 16 donc cycles pour lire un macropixel de 16 lignes.

Avec l'hypothèse d'un convertisseur par macropixel, et non plus d'un convertisseur par colonne, il faut 256 cycles pour lire l'ensemble des données pixels du macropixel. L'utilisation d'un convertisseur par colonne permet donc d'accélérer la lecture des données pixel.

La matrice de processeurs élémentaires est connectée aux macropixels à l'aide d'une interface 112 constituée d'une pluralité de connexions 210, chaque connexion reliant directement un processeur et un macropixel. Par exemple, la connexion est de type « par des via de silicium » ou « Through Silicon Via » en language anglo saxon, selon l'acronyme TSV. Avantageusement, la matrice de processeur peut rétroagir à haute cadence sur l'optique déformable.
Le processeur élémentaire comprend une pluralité d'unités de traitements locales, parallélisées, qui est en charge de reconstruire l'information de profondeur.
Avantageusement, du fait de leur proximité et de l'accès direct au macropixel, les processeurs élémentaires sont aptes à effecteur une contre réaction sur le macropixel afin de modifier certains paramètres du capteur d'image, comme par exemple le temps d'intégration, ce qui donne de la flexibilité au capteur.
Avantageusement, le processeur élémentaire calcule la netteté du macropixel correspondant à une image In. Avantageusement la netteté est déterminée en sommant, pour tous les pixels du macropixel, les gradiants (ou Laplacien) associés à chaque pixel, en tenant compte de ses voisins grâce à la présence d'un gestionnaire de voisinage 121, permettant un accès parallèle au voisinage d'un pixel donné et pouvant effectuer des opérations de convolution en un cycle.

Plus la valeur obtenue est élevée, plus la netteté est élevée. La valeur k de l'indice n correspondant à la distance focale Fk pour laquelle la netteté est la meilleure, est stockée dans la mémoire locale 123. Cette mémoire locale permet d'effectuer un traitement récursif en fonction de l'indice n, à l'aide d'un procédé de calcul du type « la forme par la distance focale » soit « Shape From Focus » en langue anglo-saxonne pour l'acronyme SFF.
La carte de netteté correspond à un tableau de données, chaque élément du tableau correspondant à un macropixel, la donnée du tableau étant égale à l'indice n de la focale fn pour laquelle la meilleure valeur de netteté du macropixel correspondant est obtenue. La mémoire locale est dimensionnée en fonction du nombre de distance focales n0, correspondant au nombre de profondeurs pour lesquelles le calcul de netteté est effectué. Par exemple pour 1024 valeurs de profondeur, une mémoire locale de 8 bits est suffisante. Il ne s'agit pas d'une mémoire d'image, qui est beaucoup plus volumineuse. En effet, du fait de l'accès direct aux pixels du capteur par macropixel, la présence d'un plan mémoire pour stocker l'image en vue de la traiter n'est plus nécessaire, avec les avantages en taille et consommation associés.
De plus cet accès direct, couplé au parallélisme des calculs et à la proximité spatial due à l'empilement, augmente drastiquement la bande passante calculatoire.

La mémoire locale contenant l'information de profondeur est mise à jour en permanence, à chaque variation de distance focale fn correspondant à l'acquisition d'une nouvelle image In par le capteur analogique 110. L'obtention de l'information de profondeur, par exemple la carte de netteté, est ainsi obtenue localement par portion d'image, sans avoir recours à une mémoire d'image, à haute cadence, avec une mise à jour en temps réel.

Un exemple de processeur élémentaire est un processeur de type entrée simple/données multiples ou « Simple Input Multiple Data » selon la langue anglo-saxonne d'acronyme SIMD, comprenant une mémoire locale.
Dans une architecture SIMD les éléments de base de calcul effectuent simultanément la même instruction. Cette architecture SIMD est compatible avec un traitement bas niveau effectué dans un macropixel. La matrice de microprocesseurs élémentaires peut être dans ce cas une matrice bidimensionnelle de processeurs SIMD.
Mais l'architecture proposée est plus souple, car chaque processeut élémentaire est indépendant permettant le traitement indépendant par macropixel et ainsi de se libérer des contraintes du SIMD pour l'architecture globale.
Avantageusement, afin d'obtenir la carte de profondeur, une table de correspondance permet d'associer à chaque valeur de distance focale une valeur de profondeur, permettant la génération de la carte de profondeur à partir de la carte de netteté, en local au niveau de la matrice de processeurs. La table de correspondance peut être déportée dans une mémoire partagée ou présente en local sous la forme d'une couche voisine de la matrice de processeurs élémentaires et contribuant à l'empilement.
Avantageusement, l'image nette en tous points est générée à partir de la carte de netteté et de la valeur de la netteté optimale correspondante, à l'aide d'une mémoire d'image déportée. Par exemple si plusieurs objets de la scène observée sont détectés à plusieurs profondeurs, l'image nette en tous points représente ces différents objets nets ramenés dans un plan unique.

Une unité de traitement 130 effectue les traitements de plus haut niveau, c'est-à-dire les traitements utilisant comme données d'entrée des données évoluées obtenues à partir des données pixel brutes issues directement du capteur d'image. Ces données d'entrée peuvent par exemple être la carte de profondeur. Ces traitements de haut niveau sont par exemple de la reconnaissance de forme, de la détection de mouvement, ou de la reconnaissance d'une région d'intérêt ou « région of interest » en langue anglo-saxonne, selon l'acronyme ROI.
L'unité de traitement 130 peut être déportée totalement par rapport à la matrice de processeurs 120, ou partiellement intégrée sous forme de couche à l'empilement, ce qui augmente la compacité du dispositif

La figure 3 décrit un exemple d'architecture du capteur selon l'invention où l'unité de traitement comprend un ensemble de processeurs 330 de type mutti-coeur, ou « multi-core » en langage anglo-saxon, de granularité supérieure à la granularité de la matrice de processeurs élémentaires. Les processeurs de l'ensemble 330 sont plus puissants mais moins nombreux que les processeurs élémentaires Avantageusement l'unité de traitement haut niveau comprend également une mémoire partagée 320, connectée à la fois à la matrice de processeurs élémentaires et à l'ensemble de processeurs mutti-coeur. La mémoire partagée est d'une taille au moins égale à la mémoire nécessaire pour stocker les données relatives à une image.

Avantageusement, la carte de profondeur et/ou la carte netteté en tous points est transmise à la mémoire partagée, elle-même connectée à un afficheur apte à transformer la carte de profondeur en une image tridimensionnelle et/ou apte à afficher l'image nette en tous points. Un système de capture est réalisé à partir du capteur selon l'invention et de l'afficheur.

Avantageusement l'unité de traitement de haut niveau est apte, en fonction des caractéristiques extraites des traitements de haut niveau, par exemple une analyse de l'image, à rétroagir à haute cadence sur l'optique déformable via le contrôleur 340 de manière à s'adapter à une situation donnée. Les traitements de haut niveau correspondent aux calculs effectués à partir de données d'entrée évoluées, calculées à partir des données pixel.
L'optique déformable devient alors un composant actif au niveau du traitement numérique de haut niveau.

Par exemple, les données d'entrées sont constituées de la carte de profondeur ou de l'image nette en tous points.
Par exemple, suite à un traitement de reconnaissance de forme identifiant une zone d'intérêt, l'unité de traitement commande à l'optique d'effectuer un zoom sur la région d'intérêt. Le traitement tridimensionnel est alors effectué spécifiquement sur la région d'intérêt afin d'augmenter la résolution spatiale.

Selon un autre exemple, suite à la détection d'un mouvement en bord de champ ou à une analyse de l'image, l'unité de traitement commande à l'optique de modifier son axe optique 103 de manière à imager sur le capteur une zone initialement hors champ. Le traitement tridimensionnel s'effectue alors sur cette nouvelle zone.

Selon un autre exemple, la rétroaction sur l'optique permet une stabilisation afin d'améliorer l'acquisition d'images.

Selon un mode de réalisation préféré de l'invention, le traitement des données est parallélisé à tous les niveaux de la chaîne de traitement comprenant la lecture des données pixels, le calcul de l'information de profondeur par macropixel et les traitements de hauts niveaux :
- chaque macropixel est lu avec un parallélisme sur les colonnes
- le calcul de l'information de profondeur est parallélisé au niveau du macropixel par la présence de plusieurs processeurs élémentaires fonctionnant en parallèle
- tous les macropixels sont lus parallèlement et indépendamment
- l'unité de traitement de haut niveau est de type multi-coeur.

Avec un haut degré de parallélisme, le capteur peut générer une carte de profondeur à haute une cadence, par exemple 200 cartes par seconde.
Ce parallélisme est rendu possible par la réalisation d'un empilement des différentes couches du capteur : optique, capteur d'image, calcul local des informations de profondeur.
Selon un mode de réalisation, au moins une partie de l'unité de traitement de haut niveau est également empilée derrière la matrice de processeurs élémentaires, telle que la mémoire partagée et la table de correspondance et/ou l'ensemble de processeurs de type multi-coeur.
La réalisation d'un empilement permet également d'obtenir un capteur compact apte à être embarqué dans des systèmes contraints en termes de poids et de volume.

Avantageusement le capteur comprend un composant apte à communiquer les informations de profondeur, telle que la carte de profondeur issue du traitement local, à un système déporté.

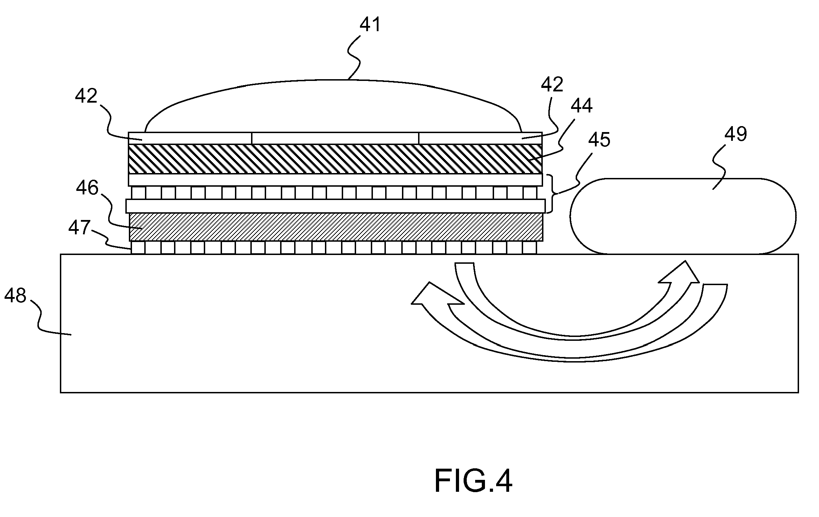

La figure 4 décrit un exemple de réalisation du capteur selon l'invention. L'optique, le capteur et la matrice de processeurs élémentaires constituent un empilement.
Le signal de commande est appliqué à l'optique déformable 41 par des électrodes 42. Le capteur d'image 44 est relié à la matrice de processeurs 46 à l'aide d'une interconnexion 45 pour empilement 3D, par exemple un technique TSV ou une technique de collage (Cuivre-Cuivre par exemple), connectant directement chaque macropixel à un processeur dédié. La matrice de processeur est connectée à un PCB 48 selon l'acronyme anglosaxon pour « Printed circuit board », circuit imprimé en français, par une connexion 47 par exemple de type BGA. Le PCB 48 peut être remplacé par un interposeur, ou par toute autre technique d'assemblage de puce.

L'unité de traitement 49, déportée par rapport à l'empilement, est constituée par exemple d'un FPGA selon l'acronyme anglo-saxon pour «Field Programmable Gâte array » soit Champ de portes logiques programmable en français, connecté au PCB. Un autre exemple d'unité de traitement est un calculateur de type MPSoC selon l'acronyme anglo-saxon pour « Multi Processor System on Chip » soit Système sur puce multi processeur. L'unité de traitement effectue les calculs de haut niveau, comprend une mémoire partagée et la table de correspondance, et gère les protocoles de communication avec l'unité centrale externe. Ces communications peuvent filaire ou sans fil en fonction de l'application.

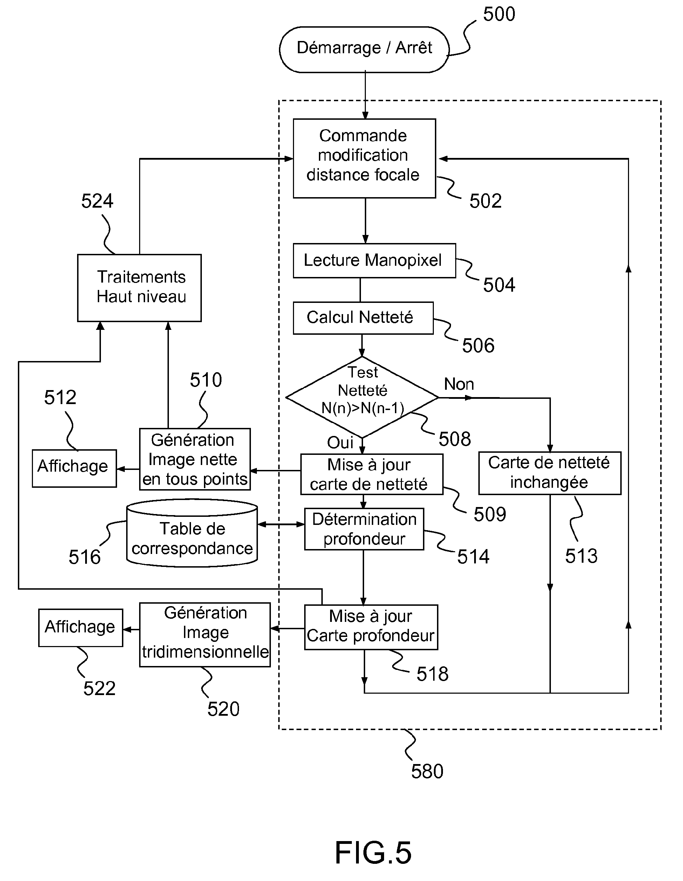

La figure 5 décrit le procédé de calcul utilisé pour calculer et traiter les informations de profondeur. L'objectif de ce procédé de calcul itératif est de rechercher, pour chaque macropixel, la distance focale fk correspondant à la meilleure netteté de ce macropixel.
Le procédé de calcul selon l'invention est basé sur le procédé de calcul SFF, acronyme de « Shape From Focus » en langue anglo saxonne, pour « forme par la focale ». Cependant, l'invention permet une mise à jour à chaque itération de la carte de netteté et de profondeur.
Après un démarrage du système 500, dans une première étape 502, l'optique déformable reçoit une commande pour modifier le plan de la scène tridimensionnelle imagé par l'optique déformable, ce plan correspondant à une distance focale F(n) (n indice variant de 1 à no). Le capteur d'image reçoit l'image I(n). Chaque pixel du capteur délivre un signal proportionnel à la lumière reçue ou donnée pixel.

L'ensemble des étapes qui suivent s'effectuent en parallèle pour tous les macropixels du capteur, et pas nécessairement de manière synchrone sur tous les macropixels.
L'étape 504 procède à la lecture des données pixels pour tous les pixels du macropixel. L'étape 506 calcule la netteté de chaque macropixel, par somme du gradient (ou du Laplacien) des données pixels de tous les pixels du macropixel. Ce calcul est effectué par la matrice de processeurs dédié, en local. Selon une variante non représentée sur la figure 5, la matrice de processeur peut, à ce stade, rétroagir sur l'optique déformable.

Puis un test 508 compare la valeur de netteté N(n) obtenue avec la valeur de distance focale F(n), avec celle précédemment obtenue N(n-1) pour la distance focale précédente Fn-1.
Si N(n) est supérieure à N(n-1),(branche oui), la carte de netteté est mise à jour à l'étape 509. La valeur de l'indice n est mémorisée dans la carte de netteté, à la place de la valeur précédemment stockée. La carte de netteté est constituée d'un tableau où sont indexés l'ensemble des macropixels, et contenant l'index k correspondant à la distance focale Fk pour laquelle la meilleure netteté a été obtenue.
La carte de netteté est mémorisée et mise à jour en local, au niveau de la matrice de processeur.
Puis dans une étape 514, la valeur de profondeur P(n) correspondant à la valeur de netteté N(n) est déterminée, par lecture d'une table de correspondance 516, qui associé à chaque valeur de distance focale, et donc d'indice n, une distance métrique égale à la profondeur.
La carte de profondeur, constituée d'un tableau où sont indexés l'ensemble des macropixels, et contenant la valeur de profondeur, est mise à jour à l'étape 518. La carte de profondeur est mémorisée et mise à jour en local, au niveau de la matrice de processeur. Une fois la mise à jour effectuée, le procédé de calcul retourne à l'étape 502 où l'optique déformable reçoit une nouvelle commande pour modifier sa distance focale à une valeur F(n+1). Le capteur reçoit alors une image I(n+1). La modification de la distance focale est synchronisée avec l'acquisition d'images par le capteur, qui s'effectue à haute cadence.
Lors du test 508, si N(n) est inférieure à N(n-1) (branche non), aucune mise à jour de la carte de netteté n'est effectuée, la valeur précédente (n-1) reste stockée dans la carte de netteté à l'étape 513. La carte de profondeur n'est pas mise à jour, la valeur P(n-1) restant stockée dans la carte de profondeur. Le procédé reboucle en 502.
La carte de netteté et la carte de profondeur sont ainsi mise à jour à la cadence d'acquisition d'images, synchronisée sur le changement de distance focale de l'optique déformable.
Selon l'invention, au moins l'ensemble des étapes décrites précédemment, comprises dans le bloc 580, sont effectuées en local par la matrice de processeurs, et en parallèle mais de façon indépendante pour tous les macropixels de l'imageur.
Selon une option, une fois la mise à jour de la carte de netteté effectuée à l'étape 509, une étape 510 constituée d'une mémorisation de la valeur de netteté optimale calculée, et optionnellement de traitements de hauts niveaux, permet de générer l'image nette en tous points. Cette mémorisation s'effectue dans une mémoire d'image déportée.
Cette image peut être visualisée sur un afficheur lors de l'étape 512 d'affichage.
Selon une option, le contenu de la carte de profondeur mis à jour à l'étape 518 ainsi que l'information sur la meilleure netteté pour chaque macropixel, peut être transféré, lors d'une étape de mémorisation 520, dans une mémoire déportée permettant un accès en un bloc à l'information. Dans cette même étape, des traitements de haut niveau peuvent être effectués, par exemple pour reproduire la texture. Le résultat de cette étape est la génération de l'image tridimensionnelle de la scène observée, qui peut être affiché lors d'une étape d'affichage 522.
Les traitements de hauts niveaux sont réalisés par l'unité de traitement effectuant des calculs à partir de données d'entrée évoluées. Ces données d'entrée évoluées comprennent l'image nette en tous points et/ou la carte de profondeur. A partir de ces données d'entrées évoluées, l'unité de traitement effectue des traitements de hauts niveaux lors de l'étape 524, comme par exemple de la reconnaissance de forme, de la recherche d'une zone d'intérêt, de la détection de mouvement, de l'analyse d'image.
Suite aux résultats de ces traitements, l'unité de traitement est apte à rétroagir sur l'optique déformable, en rebouclant sur l'étape 502, de manière à modifier les valeurs de distance focales et /ou d'axe optique, pour lesquels l'ensemble du calcul itératif de génération de l'information de profondeur est effectué.
Ainsi le capteur selon l'invention est à la fois très compact en volume et en poids, a une faible consommation, ne nécessite pas de mémoire d'image et permet d'obtenir une carte de netteté (ou de profondeur) en temps réel et à une cadence élevée. Ces performances sont rendues possibles grâce à un traitement parallèle et local des données, à l'aide d'un empilement optimisé.

## Revendications

1. Capteur d'une scène tridimensionnelle comprenant :
- une optique déformable (100) permettant une modification de la distance focale en fonction d'un signal de commande (101),
- ladite optique imageant ladite scène sur un capteur d'image analogique (110) pour une pluralité de profondeurs correspondant à une pluralité de valeurs de distance focale (fn),
- ledit capteur d'image analogique (110) réalisant une acquisition d'image
(In) pour chaque valeur de distance focale (fn),
- les images (In) étant analysées afin de déterminer au moins une information de profondeur,
- ledit capteur d'image analogique (110) comprenant une matrice de pixels (111), lesdits pixels étant regroupés en sous-matrices dénommées macropixels (113) constitués d'un sous-ensemble de pixels, chaque macropixel fonctionnant de manière indépendante de ses voisins pour l'acquisition et la lecture des données desdits pixels pour chaque portion d'image, une portion d'image étant respectivement associée à un macropixel,
- une matrice (120) bidimensionnelle de processeurs élémentaires (124), chaque macro-pixel étant connecté directement par une interface (112) à un processeur élémentaire dédié de sorte que les données pixels relatives auxdits pixels appartenant audit macropixel soient transmises et traitées par ledit processeur,
- chacun desdits processeurs élémentaires comprenant une mémoire locale (123) , un gestionnaire de voisinage (121) et une pluralité d'unités de traitements locales (122) de manière à effectuer, pour chacun des pixels du macropixel auquel ledit processeur est connecté et pour chaque portion d'image, des traitements locaux prenant en compte les pixels voisins, lesdits traitements locaux permettant de calculer l'information de profondeur dudit macropixel,
lesdits processeurs fonctionnant en parallèle et indépendamment les uns des autres de sorte que pour chaque portion d'image l'information de profondeur est traitée et calculée en parallèle et indépendamment sur l'ensemble des macropixels dudit capteur d'image,
- chaque processeur élémentaire étant apte à modifier certains paramètres du capteur d'image correspondant au macro pixel associé,
- lesdits processeurs étant aptes à être reliés à au moins une unité de traitement (130) permettant d'effectuer des calculs à partir de données d'entrée évoluées, obtenues à partir des informations de profondeur calculées par lesdits processeurs élémentaires (124)

2. Capteur selon la revendication 1 **caractérisé en ce que** ladite optique déformable (100), ledit capteur d'image (110) et ladite matrice de processeur (120) forment un empilement.

3. Capteur selon l'une des revendications 1 ou 2 **caractérisé en ce que** ladite optique déformable permet une modification de son axe optique (103) en fonction du signal de commande (101).

4. Capteur selon l'une des revendications précédentes **caractérisé en ce que** lesdits processeurs élémentaires sont aptes à communiquer avec leur proches voisins de manière à échanger des informations de profondeur.

5. Capteur selon l'une des revendications précédentes **caractérisé en ce que** chaque macropixel comprend une pluralité de colonnes de pixels (21) , chaque colonne étant reliée à un circuit de type convertisseur analogique/numérique (22) pour la lecture des données pixels de ladite chaque colonne.

6. Capteur selon l'une de revendications précédentes **caractérisé en ce que** ladite mémoire locale (123) d'un macropixel contient l'information de profondeur mise à jour à chaque nouvelle acquisition par ledit capteur d'une portion image,

7. Capteur selon la revendication 6 **caractérisé en ce que** ladite information de profondeur stockée dans ladite mémoire locale comprend une valeur de meilleure netteté du macropixel correspondant et une valeur de l'indice de la focale pour laquelle la meilleure valeur de netteté du macropixel correspondant est obtenue.

8. Capteur selon la revendication 7 **caractérisé en ce que** ladite information de profondeur stockée dans ladite mémoire locale comprend une valeur de profondeur.

9. Capteur selon l'une des revendications précédentes **caractérisé en ce que** l'unité de traitement comprend en outre une mémoire partagée (320) connectée à la fois à la matrice de processeurs élémentaires (120) et à un ensemble (330) de processeurs multi-coeur.

10. Capteur selon l'une des revendications précédentes **caractérisé en ce que** lesdites données d'entrée évoluées comprennent une carte de profondeur.

11. Capteur selon l'une des revendications précédentes **caractérisé en ce que** lesdites données d'entrée évoluées comprennent une image nette en tous points.

12. Capteur selon l'une des revendications précédentes **caractérisé en ce que** l'unité de traitement est apte à rétroagir sur ladite optique déformable (100) en fonction du résultat desdits calculs effectués par ladite unité de traitement.

13. Capteur selon l'une des revendications précédentes **caractérisé en ce qu'**il comprend en outre un composant apte à communiquer les informations de profondeur à un système déporté.

14. Capteur selon l'une des revendications précédentes **caractérisé en ce que** l'information de profondeur est obtenu à l'aide d'un procédé de calcul itératif fondé sur la détermination de la distance focale de ladite optique déformable permettant d'obtenir la meilleur netteté, ledit procédé de calcul s'effectuant localement au niveau de ladite matrice de processeurs et parallèlement pour chaque macropixel au niveau de ladite matrice de processeurs.

15. Capteur selon la revendication 14 **caractérisé en ce que** ledit procédé de calcul s'effectue localement au niveau de ladite matrice de processeurs.

16. Capteur selon l'une des revendications 14 ou 15 **caractérisé en ce que** ledit procédé de calcul permet une mise à jour à chaque itération de l'information de profondeur.

17. Système de capture d'une scène tridimensionnelle comprenant au moins un capteur selon l'une des revendications précédentes et comprenant en outre un afficheur apte à afficher une image tridimensionnelle de la scène observée.

## Patentansprüche

1. Sensor einer dreidimensionalen Szene, der Folgendes umfasst:
- eine verformbare Optik (100), die eine Modifikation der Brennweite in Abhängigkeit von einem Steuersignal (101) zulässt;
- wobei die Optik die Szene auf einem analogen Bildsensor (110) für mehrere Tiefen abbildet, entsprechend einer Mehrzahl von Brennweitenwerten (fn);
- wobei der analoge Bildsensor (110) eine Bilderfassung (In) für jeden Brennweitenwert (fn) durchführt;
- wobei die Bilder (In) so analysiert werden, dass wenigsens eine Tiefeninformation bestimmt wird;
- wobei der analoge Bildsensor (110) eine Matrix von Pixeln (111) umfasst, wobei die Pixel zu Makropixel (113) genannten Submatrizen gruppiert werden, bestehend aus einem Teilsatz von Pixeln, wobei jedes Makropixel unabhängig von seinen Nachbarn arbeitet, um Daten der Pixel für jeden Bildabschnitt zu erfassen und zu lesen, wobei ein Bildabschnitt jeweils mit einem Makropixel assoziiert ist;
- eine zweidimensionale Matrix (120) von Elementarprozessoren (124), wobei jedes Makropixel direkt über eine Schnittstelle (112) mit einem dedizierten Elementarprozessor verbunden ist, so ausgelegt, dass die Pixeldaten in Bezug auf die zu dem Makropixel gehörenden Pixel von dem Prozessor gesendet und verarbeitet werden;
- wobei jeder der Elementarprozessoren einen lokalen Speicher (123), einen Nachbarschaftsmanager (121) und mehrere lokale Verarbeitungseinheiten (122) umfasst, um für jedes der Pixel des Makropixels, mit dem der Prozessor verbunden ist, und für jeden Bildabschnitt lokale Verarbeitungsvorgänge unter Berücksichtigung der Nachbarpixel durchzuführen, wobei die lokalen Verarbeitungsvorgänge eine Berechnung der Tiefeninformation des Makropixels zulassen;
wobei die Prozessoren parallel und unabhängig voneinander arbeiten, so dass für jeden Bildabschnitt die Tiefeninformation parallel und unabhängig an dem Satz von Makropixeln des Bildsensors verarbeitet und berechnet wird;
- wobei jeder Elementarprozessor bestimmte Parameter des Bildsensors modifizieren kann, die dem assoziierten Makropixel entsprechen;
- wobei die Prozessoren mit mindestens einer Verarbeitungseinheit (130) verbunden werden können, die die Durchführung von Berechnungen auf der Basis von entwickelten Eingabedaten zulässt, die auf der Basis der von den Elementarprozessoren (124) berechneten Tiefeninformation erhalten werden.

2. Sensor nach Anspruch 1, **dadurch gekennzeichnet, dass** die verformbare Optik (100), der Bildsensor (110) und die Prozessormatrix (120) einen Stapel bilden.

3. Sensor nach Anspruch 1 oder 2, **dadurch gekennzeichnet, dass** die verformbare Optik eine Modifikation ihrer optischen Achse (103) in Abhängigkeit von dem Steuersignal (101) zulässt.

4. Sensor nach einem der vorherigen Ansprüche, **dadurch gekennzeichnet, dass** die Elementarprozessoren mit ihren nahen Nachbarn kommunizieren können, um Tiefeninformationen auszutauschen.

5. Sensor nach einem der vorherigen Ansprüche, **dadurch gekennzeichnet, dass** jedes Makropixel mehrere Spalten von Pixeln (21) umfasst, wobei jede Spalte mit einer Schaltung des Analog-Digital-Wandlertyps (22) zum Lesen von Pixeldaten von jeder der Spalten verbunden ist.

6. Sensor nach einem der vorherigen Ansprüche, **dadurch gekennzeichnet, dass** der lokale Speicher (123) eines Makropixels die Tiefeninformation enthält, die bei jeder neuen Erfassung eines Bildabschnitts durch den Sensor aktualisiert wird.

7. Sensor nach Anspruch 6, **dadurch gekennzeichnet, dass** die in dem lokalen Speicher gespeicherte Tiefeninformation einen besten Schärfewert des entsprechenden Makropixels und einen Wert des Indexes des Brennpunkts umfasst, für den der beste Schärfewert des entsprechenden Makropixels erhalten wird.

8. Sensor nach Anspruch 7, **dadurch gekennzeichnet, dass** die in dem lokalen Speicher gespeicherte Tiefeninformation einen Tiefenwert umfasst.

9. Sensor nach einem der vorherigen Ansprüche, **dadurch gekennzeichnet, dass** die Verarbeitungseinheit ferner einen Gemeinschaftsspeicher (320) umfasst, der gleichzeitig mit der Matrix von Elementarprozessoren (120) und mit einem Satz (330) von Multikernprozessoren verbunden ist.

10. Sensor nach einem der vorherigen Ansprüche, **dadurch gekennzeichnet, dass** die entwickelten Eingabedaten eine Tiefenkarte beinhalten.

11. Sensor nach einem der vorherigen Ansprüche, **dadurch gekennzeichnet, dass** die entwickelten Eingabedaten ein in allen Punkten scharfes Bild umfassen.

12. Sensor nach einem der vorherigen Ansprüche, **dadurch gekennzeichnet, dass** die Verarbeitungseinheit auf die verformbare Optik (100) in Abhängigkeit vom Ergebnis der von der Verarbeitungseinheit durchgeführten Berechnungen rückwirken kann.

13. Sensor nach einem der vorherigen Ansprüche, **dadurch gekennzeichnet, dass** er ferner eine Komponente umfasst, die die Tiefeninformationen zu einem fernen System übermitteln kann.

14. Sensor nach einem der vorherigen Ansprüche, **dadurch gekennzeichnet, dass** die Tiefeninformation mit einem Verfahren des iterativen Berechnens erhalten wird, das auf der Ermittlung der Brennweite der verformbaren Optik basiert, mit der die beste Schärfe erhalten werden kann, wobei das Rechenverfahren lokal an der Matrix von Prozessoren und parallel für jedes Makropixel an der Prozessormatrix durchgeführt wird.

15. Sensor nach Anspruch 14, **dadurch gekennzeichnet, dass** das Berechnungsverfahren lokal an der Prozessormatrix durchgeführt wird.

16. Sensor nach Anspruch 14 oder 15, **dadurch gekennzeichnet, dass** das Rechenverfahren eine Aktualisierung bei jeder Iteration der Tiefeninformation zulässt.

17. System zum Erfassen einer dreidimensionalen Szene, das mindestens einen Sensor nach einem der vorherigen Ansprüche und ferner ein Display umfasst, das ein dreidimensionales Bild der beobachteten Szene anzeigen kann.

## Claims

1. A three-dimensional scene sensor comprising:
- a deformable optic (100) allowing the focal distance to be modified as a function of a control signal (101);
- said optic imaging said scene on an analogue image sensor (110) for a plurality of depths that correspond to a plurality of focal distance values (fn);
- said analogue image sensor (110) carrying out an image acquisition (In) for each focal distance value (fn);
- the images (In) being analysed so as to determine at least one item of depth information;
- said analogue image sensor (110) comprising a matrix of pixels (111), said pixels being grouped into sub-matrices called macropixels (113) made up of a sub-set of pixels, each macropixel operating independently of its neighbours for acquiting and reading data of said pixels for each image portion, an image portion respectively being associated with a macropixel;
- a two-dimensional matrix (120) of elementary processors (124), each macropixel being directly connected to a dedicated elementary processor via an interface (112) so that the pixel data relating to said pixels belonging to said macropixel are transmitted and processed by said processor;
- each of said elementary processors comprising a local memory (123), a neighbourhood manager (121) and a plurality of local processing units (122) so as to carry out, for each of the pixels of the macropixel to which said processor is connected and for each image portion, local processing operations taking into account the neighbouring pixels, said local processing allowing the depth information of said macropixel to be computed;
said processors operating in parallel and independently of each other so that, for each image portion, the depth information is processed and computed in parallel and independently on all of the macropixels of said image sensor;
- each elementary processor being capable of modifying certain parameters of said image sensor that correspond to the associated macropixel;
- said processors being capable of being connected to at least one processing unit (130) allowing computations to be carried out on the basis of enhanced input data that is obtained on the basis of depth information computed by said elementary processors (124).

2. The sensor according to claim 1, **characterised in that** said deformable optic (100), said image sensor (110) and said processor matrix (120) form a stack.

3. The sensor according to any one of claims 1 to 2, **characterised in that** said deformable optic allows its optical axis (103) to be modified as a function of said control signal (101).

4. The sensor according to any one of the preceding claims, **characterised in that** said elementary processors are capable of communicating with their near neighbours so as to exchange depth information.

5. The sensor according to any one of the preceding claims, **characterised in that** each macropixel comprises a plurality of columns of pixels (21), each column being connected to a circuit (22) of the analogue/digital converter type for reading pixel data from each of said columns.

6. The sensor according to any one of the preceding claims, **characterised in that** said local memory (123) of a macropixel contains the depth information that is updated upon each new acquisition of an image portion by said sensor.

7. The sensor according to claim 6, **characterised in that** said depth information that is stored in said local memory comprises a value of best sharpness of the corresponding macropixel and a value of the index of the focal point, for which the best sharpness value of the corresponding macropixel is obtained.

8. The sensor according to claim 7, **characterised in that** said depth information that is stored in said local memory comprises a depth value.

9. The sensor according to any one of the preceding claims, **characterised in that** said processing unit further comprises a shared memory (320) connected both to said matrix of elementary processors (120) and to a set (330) of multi-core processors.

10. The sensor according to any one of the preceding claims, **characterised in that** said enhanced input data comprises a depth map.

11. The sensor according to any one of the preceding claims, **characterised in that** said enhanced input data comprises a sharp image at all points.

12. The sensor according to any one of the preceding claims, **characterised in that** said processing unit is capable of feeding back on said deformable optic (100) as a function of the result of said computations carried out by said processing unit.

13. The sensor according to any one of the preceding claims, **characterised in that** it further comprises a component that is capable of communicating the depth information to a remote system.

14. The sensor according to any one of the preceding claims, **characterised in that** the depth information is obtained using a method of iterative computation that is based on determining the focal distance of said deformable optic allowing the best sharpness to be obtained, said computation method being carried out locally on said matrix of processors and in parallel for each macropixel at the level of said matrix of processors.

15. The sensor according to claim 14, **characterised in that** said computation method is carried out locally at the level of said matrix of processors.

16. The sensor according to any one of claims 14 to 15, **characterised in that** said computation method allows an update to be carried out upon each iteration of the depth information.

17. A system for capturing a three-dimensional scene comprising at least one sensor according to any one of the preceding claims and further comprising a display capable of displaying a three-dimensional image of the observed scene.
